# EUROPÄISCHE PATENTSCHRIFT

(11) **EP 3 178 326 B1**
(45) Veröffentlichungstag und Bekanntmachung des Hinweises auf die Patenterteilung: **28.03.2018**
(21) Anmeldenummer: 15198179.2
(22) Anmeldetag: 07.12.2015
(51) Int. Cl.: A22C 11/02

(54) **VERFAHREN UND VORRICHTUNG ZUM BEFÜLLEN VON WURSTHÜLLEN**
METHOD AND DEVICE FOR FILLING SAUSAGE CASINGS
PROCÉDÉ ET DISPOSITIF DESTINÉS AU REMPLISSAGE D'ENVELOPPES DE SAUCISSES

(43) Veröffentlichungstag der Anmeldung: 14.06.2017
(73) Patentinhaber: Albert Handtmann Maschinenfabrik GmbH & Co. KG, 88400 Biberach (DE)
(72) Erfinder: Betz, Andreas, 88471 Baustetten (DE); Bächtle, Manfred, 88433 Schemmerhofen (DE); Schliesser, Gerhard, 88489 Wain (DE); Restle, Christian, 88447 Birkenhard (DE); Osswald, Florian, 89079 Ulm (DE)
(74) Vertreter: Grünecker Patent- und Rechtsanwälte PartG mbB

(56) Entgegenhaltungen:
- EP-A1- 0 031 607
- EP-A1- 0 743 254
- DE-A1- 2 402 361
- DE-A1- 2 437 562
- DE-A1- 2 741 291
- DE-C2- 2 660 519

## Beschreibung

Die Erfindung betrifft ein Verfahren und eine Vorrichtung zum Befüllen von Wursthüllen mit pastöser Masse gemäß den Oberbegriffen der Ansprüche 1 und 10.

Mit pastöser Masse befüllte Würste werden mit Hilfe von Füllmaschinen gefertigt, bei denen die pastöse Masse zunächst in einen Trichter gefüllt wird, über ein Förderwerk in ein Füllrohr gefördert und durch das Füllrohr in eine Wursthülle ausgestoßen wird (vgl. EP 0 031 607). Während des Befüllvorgangs steht das Füllgut unter Druck und wird komprimiert. Beim Beenden des Füllvorgangs, z.B. beim Aufziehen einer neuen Wursthülle auf das Füllrohr, entspannt sich das in der Füllgutzuführung (zwischen Förderwerk und Füllrohrende) verbleibende Füllgut aufgrund des Luftgehaltes im Füllgut, der etwa bei 0,5 bis 10 % liegt. Da das Füllgut sich nicht zum Förderwerk hin ausdehnen kann, führt diese Füllgutexpansion dazu, dass ein Teil des Füllguts am offenen Füllrohrende austritt. Dieser Effekt ist unerwünscht, da einerseits das ausgetretene Füllgut empfindliche Wursthüllen befeuchten und damit schädigen kann und es andererseits bei der Produktion zu Darmplatzern kommen kann. Weiter führt austretendes Füllgut zu Gewichtsungenauigkeiten bei der oder den ersten Portionen einer nachfolgenden Darmraupe. Das ausgetretene Füllgut kann dem Abfüllprozess nicht mehr zugeführt werden und ist somit Verlust. Ein weiterer Nachteil ist, dass dieses Füllgut die Maschine während der Produktion verschmutzt. Füllgut kann aber auch viskositätsbedingt austreten.

Hiervon ausgehend liegt der vorliegenden Erfindung die Aufgabe zugrunde, ein Verfahren und eine Vorrichtung bereitzustellen, die am Ende des Befüllvorgangs das Austreten von Füllgut am Füllrohrende verhindern oder zumindest minimieren.

Erfindungsgemäß wird die Aufgabe durch die Merkmale der Ansprüche 1 und 10 gelöst.

Bei dem erfindungsgemäßen Verfahren zum Befüllen von Wursthüllen mit pastöser Masse durch ein Füllrohr wird die pastöse Masse dem Füllrohr durch eine Öffnung an seinem hinteren Ende in Axialrichtung zugeführt. Am Ende des Befüllvorgangs wird das Füllrohr aus seiner Füllposition in Axialrichtung zurück, entgegen der Transportrichtung der pastösen Masse, auf ein axial angeordnetes Verschlusselement gefahren, wodurch die Öffnung verschlossen wird. Somit kann der Fluss der pastösen Masse zum Füllrohr hin abgesperrt werden. Die expandierende Luft im Füllgut kann somit das Füllgut nicht mehr durch das Füllrohr ins Freie drücken. Lediglich das im Füllrohr befindliche Füllgut kann noch zum Füllrohrende hin expandieren. Die pastöse Masse kann erfindungsgemäß ohne Umlenkung oder ohne große Querschnittsverengung während des Füllvorgangs in das Füllrohr gelangen. Dabei fließt die pastöse Masse einfach in der Zuführeinrichtung um das Verschlusselement herum in das Füllrohr. Der Druck der pastösen Masse muss bei dieser Lösung nicht gegen eine Fremdenergie (z.B. Feder) den Durchflussquerschnitt öffnen, wie dies z.B. bei einem Rückschlagventil der Fall wäre. Wenn am Ende des Befüllvorgangs das Füllrohr axial nach hinten, d.h. entgegen der Transportrichtung der pastösen Masse, geschoben wird, kann das Füllrohr beispielsweise aus einer Darmbremse herausgezogen werden, um neue Wursthülle aufzuziehen, ohne dass ein Verschwenken und damit ein komplizierter Mechanismus notwendig ist. Das Füllrohr kann auf einfache und schnelle Art und Weise nach dem Füllvorgang verschlossen werden. Aus einer Endposition kann das Füllrohr dann wieder in die Füllposition nach vorne bewegt werden.

Gemäß einer bevorzugten Ausführungsform wird, nachdem das Füllrohr eine erste Strecke S1 auf das Verschlusselement bewegt wurde und somit die Öffnung verschlossen wurde, das Füllrohr und das Verschlusselement zusammen über eine zweite Strecke S2 in Axialrichtung nach hinten in eine Endposition verfahren. Das bedeutet, dass, wenn das Füllrohr beispielsweise zum Aufziehen einer neuen Wursthülle in Axialrichtung nach hinten bewegt wird, die Öffnung bereits während eines Teils des Wegs nach hinten verschlossen ist, so dass keine pastöse Masse mehr in das Füllrohr eintreten kann. Das heißt, dass die Füllrohröffnung und somit der Fluss der pastösen Masse in das Füllrohr hinein bereits nach einem kurzen Verfahrweg abgesperrt wird. Ganz besonders vorteilhaft ist es, wenn die zweite Strecke S2 ≥ der ersten Strecke S1 ist.

Es ist vorteilhaft, wenn das Füllrohr und die Verschlusseinrichtung über eine Halteeinrichtung miteinander verbunden sind, derart, dass die Öffnung auch bei der gemeinsamen Bewegung des Füllrohrs und des Verschlusselements verschlossen bleibt. Besonders einfach ist eine entsprechende Verbindung über eine Magnethalteeinrichtung zu realisieren, wobei das Verschlusselement über Magnetkraft am Füllrohr haftet. Es sind jedoch auch andere lösbare Halteeinrichtungen, wie beispielsweise Einrasteinrichtungen möglich.

Vorteilhafterweise ist vorgesehen, dass das Füllrohr, nachdem es z.B. verschlossen wurde und beispielsweise eine neue Wursthülle aufgebracht wurde, wieder weg vom Verschlusselement in eine Füllposition bewegt wird. Vorteilhafterweise werden das Verschlusselement und das Füllrohr gemeinsam aus der Endposition in entgegengesetzter Axialrichtung wieder nach vorne bewegt. Über die Halteeinrichtung sind Verschlusselement und Füllrohr dabei immer noch miteinander verbunden. Bevor das Füllrohr wieder in der Füllposition angeordnet ist, wird die Öffnung des Füllrohrs wieder geöffnet, indem sich das Verschlusselement und das Füllrohr auseinander bewegen. Vorzugsweise wird die Öffnung nach einer Strecke, die der zweiten Strecke S2 entspricht, geöffnet.

Das Verschlusselement wird vorzugsweise, nachdem es die zweite Strecke S2 in Axialrichtung nach vorne bewegt wurde, wieder gestoppt. Vorzugsweise läuft das Verschlusselement dabei auf Anschlag. Da das Füllrohr weiter nach vorne bewegt wird, löst sich die Verbindung, z.B. Magnetverbindung, zwischen Füllrohr und Verschlusselement, so dass die Öffnung freigelegt wird. Das Füllrohr wird anschließend wieder in seine Füllposition gebracht. Wenn das Verschlusselement beispielsweise in der Anschlagsposition über die weitere Halteeinrichtung, insbesondere durch Magnetkraft gehalten wird, kann verhindert werden, dass bei einem Rücksaugvorgang eines Förderwerks das Verschlusselement nach hinten in Richtung Förderwerk gezogen bzw. rückgesaugt wird.

Am Ende des Befüllvorgangs bedeutet z.B., dass sich das Füllrohr aus der Füllposition in Axialrichtung zurückbewegt, wenn ein Förderwerk zum Beschicken des Füllrohrs mit pastöser Masse ausgeschaltet wird. Nach dem Ausschalten kann das Förderwerk rückwärts laufen, um etwaige Reste in einer Zuführeinrichtung, die sich an das Förderwerk anschließt, abzusaugen und um die Verkleinerung des Füllgutvolumens infolge der Axialbewegung zu kompensieren.

Vorteilhafterweise wird das Verschlusselement, das beispielsweise länglich ausgebildet ist, z.B. als länglicher Stößel, bei seiner Axialbewegung in einer Führung geführt. Das Verschlusselement kann durch das Füllrohr bewegt bzw. angetrieben werden und/oder über einen eigenen Antrieb und/oder über z.B. Federenergie bewegt werden. Wird das Verschlusselement durch das Füllrohr bewegt, kann eine entsprechende Vorrichtung besonders einfach und kostengünstig realisiert werden.

Das Füllrohr kann beispielsweise bei manchen Anwendungen ein Füllgutzuführrohr umfassen sowie einen axial angeordneten abkoppelbaren vorderen Füllrohrabschnitt, wobei in der Endposition der vordere Füllrohrabschnitt abgekoppelt ist und vorzugsweise die vordere Öffnung des Füllgutzuführrohrs verschlossen wird.

So kann beispielsweise der vordere Füllrohrabschnitt ausgetauscht werden, beispielsweise indem der vordere Füllrohrabschnitt über eine Dreheinrichtung weg gedreht und durch einen neuen Füllrohrabschnitt ersetzt wird.

Eine Vorrichtung gemäß der vorliegenden Erfindung zum Befüllen von Wursthüllen mit pastöser Masse kann insbesondere nach einem Verfahren gemäß mindestens einem der Ansprüche 1-9 betrieben werden. Die Vorrichtung umfasst ein Füllrohr, das axial beweglich angeordnet ist, eine Zuführeinrichtung, über die die pastöse Masse von einem Förderwerk einer Öffnung am hinteren Ende des Füllrohrs axial zuführbar ist. Erfindungsgemäß ist ein axial angeordnetes Verschlusselement vorgesehen, über das die Öffnung am Füllrohrende verschließbar ist, wenn das Füllrohr aus seiner Füllposition zurück, entgegen der Transportrichtung der pastösen Masse, auf das Verschlusselement gefahren wird. Dabei kann die Vorrichtung einen Antrieb aufweisen, der das Füllrohr axial vor und zurück bewegen kann.

Das Verschlusselement ist dabei vorzugsweise axial beweglich in der Zuführeinrichtung angeordnet, insbesondere als axial beweglicher Stößel, dessen vorderes Ende die Füllrohröffnung verschließt.

Das Füllrohr und das Verschlusselement können gemeinsam in Axialrichtung nach hinten in eine Endposition verfahren werden. Das Füllrohr ist über eine Halteeinrichtung mit dem Verschlusselement verbindbar, insbesondere mit einer Magnethalteeinrichtung, die einfach und kostengünstig bewerkstelligt werden kann. Vorteilhafterweise wird die axiale Bewegung des Verschlusselements nach vorne durch eine erste Stoppeinrichtung, insbesondere einen Anschlag begrenzt, wobei vorzugsweise das Verschlusselement durch eine weitere Halteeinrichtung in der Anschlagposition, insbesondere durch eine Magnethalteeinrichtung, gehalten wird. Der Anschlag ermöglicht, dass sich das Füllrohr weiter nach vorne bewegen kann, während das Verschlusselement gestoppt wird, so dass sich das Füllrohr und das Verschlusselement auseinander bewegen können und die Öffnung am hinteren Ende des Füllrohrs erneut geöffnet wird. Die Halteeinrichtung ermöglicht, dass das Verschlusselement bei einem Rücksaugvorgang der Pumpe nicht nach hinten gezogen wird.

Das Füllrohr und/oder das Verschlusselement werden in der Endposition durch eine zweite Stoppeinrichtung, insbesondere einen zweiten Anschlag, gehalten. Läuft jeweils das Verschlusselement auf den ersten oder zweiten Anschlag, so kann über das Verschlusselement auf einfache Art und Weise das Füllrohr korrekt in seiner Füllposition und Endposition positioniert werden.

Vorteilhafterweise ist die Zuführeinrichtung mit dem Auslauf eines Förderwerks verbunden. Die vorliegende Erfindung wird nachfolgend unter Bezugnahme folgender Figuren näher erläutert:
- Fig. 1: zeigt grob schematisch einen Schnitt durch eine erfindungsgemäße Vorrichtung in einer Füllposition.
- Fig. 2a: zeigt grob schematisch eine Seitenansicht einer erfindungsgemäßen Vorrichtung in einer Füllposition.
- Fig. 2b: zeigt einen Schnitt durch die in Fig. 2a gezeigte Vorrichtung in einer Füllposition.
- Fig. 2c: zeigt die in Fig. 2b gezeigte Vorrichtung in einer Verschlussposition.

- Fig. 2d: zeigt die in Fig. 2b und c gezeigte Vorrichtung in einer Endposition.
- Fig. 3a: zeigt eine Seitenansicht eines weiteren Ausführungsbeispiels gemäß der vorliegenden Erfindung in einer Füllposition.
- Fig. 3b: zeigt einen Schnitt durch die in Fig. 3a gezeigte Vorrichtung in einer Füllposition.
- Fig. 3c: zeigt die in Fig. 3b gezeigte Vorrichtung in einer Verschlussposition.
- Fig. 3d: zeigt die in Fig. 3b und 3c gezeigte Darstellung in einer Endposition.
- Fig. 4: zeigt einen Ablaufplan eines Verfahrens gemäß der vorliegenden Erfindung.

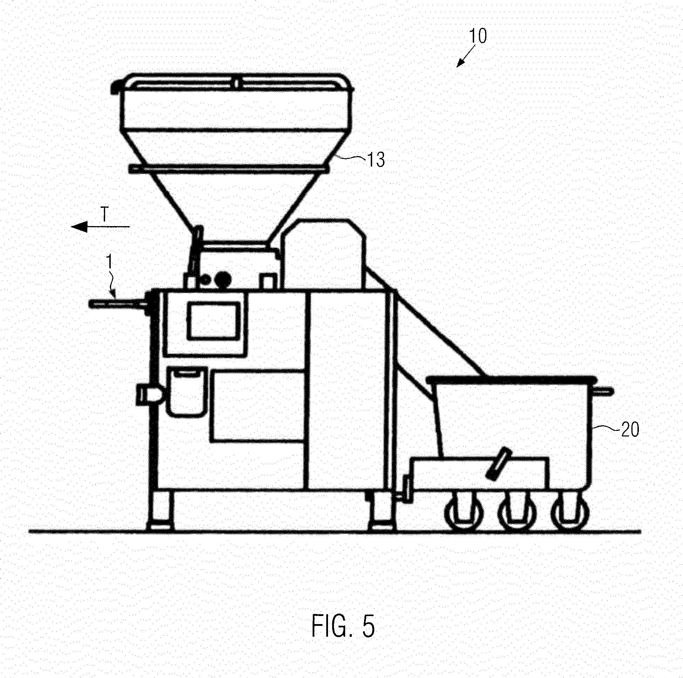

- Fig. 5: zeigt grob schematisch eine Füllmaschine gemäß der vorliegenden Erfindung.

Die Füllmaschine 10 weist einen Trichter 13 auf, zur Aufnahme von pastöser Masse, d.h. von pastösem Lebensmittel, wie insbesondere Wurstbrät oder andere Lebensmittelmasse etc.

Das pastöse Lebensmittel kann beispielsweise über einen Brätwagen 20 und eine entsprechenden Hubeinrichtung angehoben und in den Trichter gekippt werden. Unterhalb des Trichters befindet sich ein nicht dargestelltes Förderwerk 7, insbesondere eine Flügelzellenpumpe, die die pastöse Masse, wie nachfolgend noch beschrieben wird, in ein Füllohr 1 schiebt. Das Füllrohr 1 stößt die pastöse Masse z.B. in eine Wursthülle aus oder die Wursthülle wird coextrudiert.

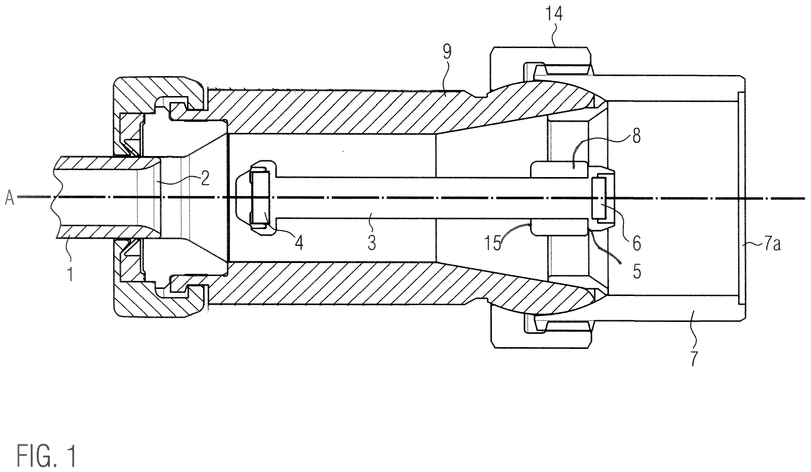

Fig. 1 zeigt den Auslass 7a des Förderwerks 7, der über eine Zuführeinrichtung 9 mit dem Füllrohr 1 verbunden ist. Die Zuführeinrichtung 9 ist hier beispielsweise rohrförmig ausgebildet, und weist einen größeren Durchmesser auf als das Füllrohr 1. Die Zuführeinrichtung 9 ist über eine Befestigungseinrichtung 14 mit dem Förderwerk 7 druckdicht verbunden. Am vorderen Ende, d.h. dem Förderwerk 7 abgewandten Ende der Zuführeinrichtung 9, ist das Füllrohr 1 axial beweglich und nach außen abgedichtet eingesetzt. Weiter ist im Inneren der Zuführeinrichtung 9 ein ebenfalls axial bewegliches Verschlusselement 3 angeordnet. Das Verschlusselement 3 ist hier als beweglicher länglicher Stößel ausgebildet, der einen vorderen Abschnitt aufweist, der derart ausgebildet ist, dass er eine Öffnung 2 des Füllrohrs 1, durch die pastöse Masse in Axialrichtung zuführbar ist, verschließen kann. Dabei ist z.B. die Aussenkontur des vorderen Bereichs des Verschlusselementes derart ausgebildet, z.B. konisch, dass sie mit der Innenkontur, die z.B. komplementär dazu ausgebildet ist, abschließt. Dabei kann das Verschlusselement 3 eine Halteeinrichtung 4 aufweisen, insbesondere eine Magnethalteeinrichtung, die das Füllrohr 1 und das Verschlusselement 3 über Magnetkraft miteinander verbindet. Das Verschlusselement 3 ist in diesem Ausführungsbeispiel in dem Führungselement 8 axial beweglich gelagert. Das Führungselement 8 ist innerhalb der Zuführeinrichtung 9 befestigt und weist in einer Ebene senkrecht zu der in Fig. 1 dargestellten Ebene, d.h. senkrecht zur Achse A großflächige Öffnungen, z.B. nierenförmige Öffnungen für den Durchfluss der pastösen Masse auf. Somit kann die pastöse Masse durch die Zuführeinrichtung 9 um das Verschlusselement 3 herum Richtung Füllrohr 1 strömen und dieses in Axialrichtung A befüllen.

Der hintere Abschnitt des länglichen Verschlusselements, hier des Stößels 3,liegt hinter dem Führungselement 8 und weist ebenfalls einen größeren Querschnitt im Endbereich auf, und kann auch hier eine zweite Halteeinrichtung 6, z.B. in Form einer Magnethaltevorrichtung, aufweisen, die den Stößel an der Führung 8 mittels Magnetkraft hält. Der vordere Abschnitt sowie der hintere Abschnitt des Verschlusselements 3 weisen jeweils einen größeren Durchmesser auf, als der mittlere Bereich des Verschlusselements 3, derart, dass bei der Axialbewegung der vordere und hintere Abschnitt jeweils auf Anschlag 5 bzw. 15 des Führungselements 8 laufen können. Somit sind die vordere und hintere Endposition des Verschlusselements begrenzt und festgelegt. Die vordere Endposition entspricht dabei z.B. der Füllposition, wie sie in Fig. 1 dargestellt ist. Eine hintere Anschlagposition entspricht beispielsweise einer hinteren Endposition. Eine hintere Endposition kann jedoch auch vor der hinteren Anschlagposition am Führungselement liegen, wobei die Bewegung nach hinten beispielsweise durch Stoppen eines Antriebs begrenzt wird.

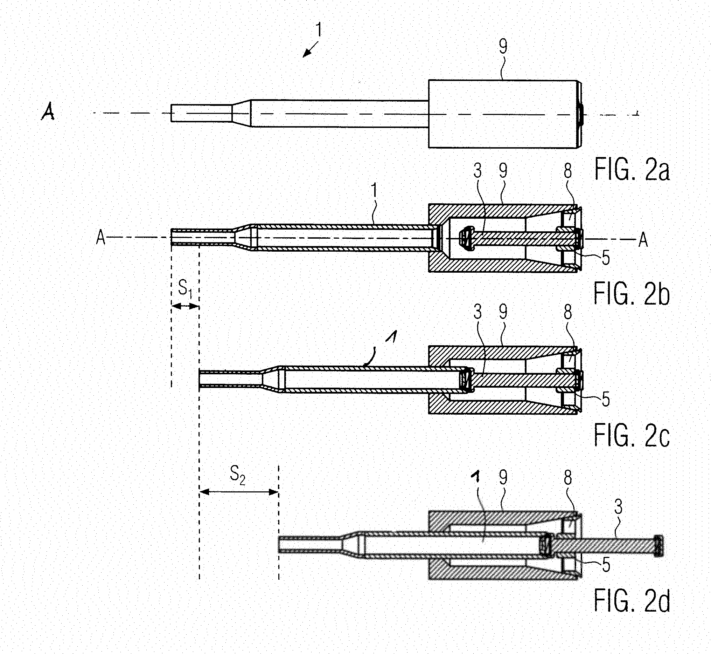

Fig. 2a-d zeigen hier die unterschiedlichen Positionen des axial verschieblichen Füllrohrs 1.

Fig. 2a zeigt eine Seitenansicht der erfindungsgemäßen Vorrichtung, wobei hier einfachheitshalber kein Förderwerk 7 dargestellt ist. Fig. 2b zeigt das Füllrohr in einer vorderen Position, d.h. in einer Füllposition, in der Füllgut vom Förderwerk 7 durch die Öffnung 7a in die Zuführeinrichtung 7 gefördert wird und durch die Öffnungen des Führungselementes 8 am Verschlusselement vorbei in die Öffnung 2 des Füllrohrs 1 gefördert wird und vom Füllrohr 1 ausgestoßen werden kann. In dieser Position ist die Öffnung 2 des Füllrohrs 1 geöffnet. Das Verschlusselement 3 befindet sich ebenfalls in einer vorderen Füllposition z.B. Endposition. Der hintere Bereich des Verschlusselements 3 wird durch einen Anschlag 5, hier am Führungselement 8, in dieser Position gehalten d.h. die Bewegung nach vorne begrenzt.

Soll nun z.B. auf ein Füllrohr eine neue Wursthülle aufgezogen werden, muss der Befüllvorgang beendet werden, d.h. unterbrochen werden. Hierzu wird das Förderwerk 7 gestoppt. Gleichzeitig oder unmittelbar danach, d.h. bis zu 0,2 s nach Ausschalten des Förderwerks 7, wird über einen nicht dargestellten Antrieb das Füllrohr 1 in Axialrichtung A zurück, d.h. in Richtung Förderwerk um eine Strecke S1 verschoben, wie aus Fig. 2c hervorgeht.

Das Füllrohr 1 wurde nun also so weit in Axialrichtung zurück bewegt, dass das Füllrohr 1 auf das Verschließelement 3 aufläuft und die Öffnung 2 dabei verschlossen wird. Über eine entsprechende Halteeinrichtung 4, hier eine Magnetverbindung, ist eine sichere Verbindung zwischen Füllrohr und Verschlusselement 3 gewährleistet. Das Verschlusselement 3 befindet sich, wie aus Fig. 2c hervorgeht, in dieser Verschlussposition vorzugsweise immer noch in der gleichen Position wie in der Fig. 2b. Gemäß einer bevorzugten Ausführungsform kann, nachdem das Förderwerk 7 gestoppt wurde, das Förderwerk unmittelbar oder kurz danach rückwärts angetrieben werden, um Reste von Füllgut aus dem Auslauf 7a der Förderpumpe und der Zuführeinrichtung 9 rückzusaugen, z.B. so lange, bis die axiale Rückwärtsbewegung abgeschlossen ist.

Dabei ist insbesondere vorteilhaft, dass das Verschlusselement 3 über eine zweite Halteeinrichtung 6, hier eine Magnethalteeinrichtung, in seiner vorderen Position fixiert ist und gehalten wird. Somit kann ein Zurücksaugen des Verschlusselementes durch das Rücksaugens des Förderwerks auf einfache und wirksame Art und Weise verhindert werden. Darüber hinaus ist die zweite Halteeinrichtung 6 auch deswegen vorteilhaft, da die Öffnung 2 sicher verschlossen werden kann, wenn das Rohr 1 auf das Verschlusselement 3 unter Gegendruck aufgeschoben werden kann. Dann können gegebenenfalls auch andere Halteeinrichtungen, beispielsweise mechanische Halteeinrichtungen, Einrasteinrichtungen, Clipeinrichtungen etc. am vorderen Ende des Verschlusselements 3 zusätzlich oder alternativ zu der Magneteinrichtung 4 verwendet werden.In der Verschlussposition, wie in Fig. 2c gezeigt ist, ist der Weg für das pastöse Gut in das Füllrohr verschlossen.

Wie aus Fig. 2d hervorgeht, wird im Anschluss das Füllrohr 1 weiter um eine Strecke S2 nach hinten in eine Endposition verschoben. Dies kann beispielsweise eine Position sein, in der das vordere sich erweiternde Ende des Verschlusselements 3 auf Anschlag 15 beispielsweise am Führungselement 8 aufläuft. Die Rückwärtsbewegung kann jedoch auch einfach durch Stoppen und Halten des Füllrohrantriebs erfolgen. Bei der Bewegung des Füllrohrs 1 und des Verschlusselements 3 bleibt die Öffnung 2 verschlossen. Füllrohr 1 und Verschlusselement 3 können sich also gemeinsam in Axialrichtung bewegen, wobei das Verschlusselement 3 durch das Füllrohr 1 geschoben werden kann, so dass kein gesonderter Antrieb für das Verschlusselement nötig ist. Bei der in Fig. 2d gezeigten Endposition kann beispielsweise das Förderwerk 7 immer noch rückwärts laufen, z.B. so lange, bis das eingeschlossene Füllgut drucklos ist. In dieser Endposition, wie sie in Fig. 2d gezeigt ist, kann beispielsweise ein Darmwechsel erfolgen.

Im Anschluss wird dann das Füllrohr 1 wieder aus der Endposition, wie sie in Fig. 2d gezeigt ist, nach vorne in eine Füllposition, wie sie in Fig. 2b gezeigt ist, bewegt. Dabei öffnet sich bei der Bewegung nach vorne die Öffnung 2 nachdem das Füllrohr 1 um eine Strecke S2 nach vorne bewegt wurde, da das Verschlusselement 3 in der in Fig. 2c gezeigten Position gehalten wird, z.B. durch den Anschlag 5 und die Halteeinrichtung 6, während sich das Füllrohr 1 weiter nach vorne bewegen kann. Somit kann sich auf einfache Art und Weise die Halteeinrichtung, hier die Magnetverbindung zwischen der Halteeinrichtung 4 am Verschlusselement 3 und dem Füllrohr 1 lösen. Das Füllrohr 1 wird dann weiter in die in Fig. 2b gezeigte Position verbracht. In dieser Füllposition kann dann der Füllvorgang weiter erfolgen, wobei die Förderpumpe wieder in Vorwärtsrichtung läuft und das Füllgut wieder durch die Zuführeinrichtung 9 axial ins Füllrohr 1 geführt wird.

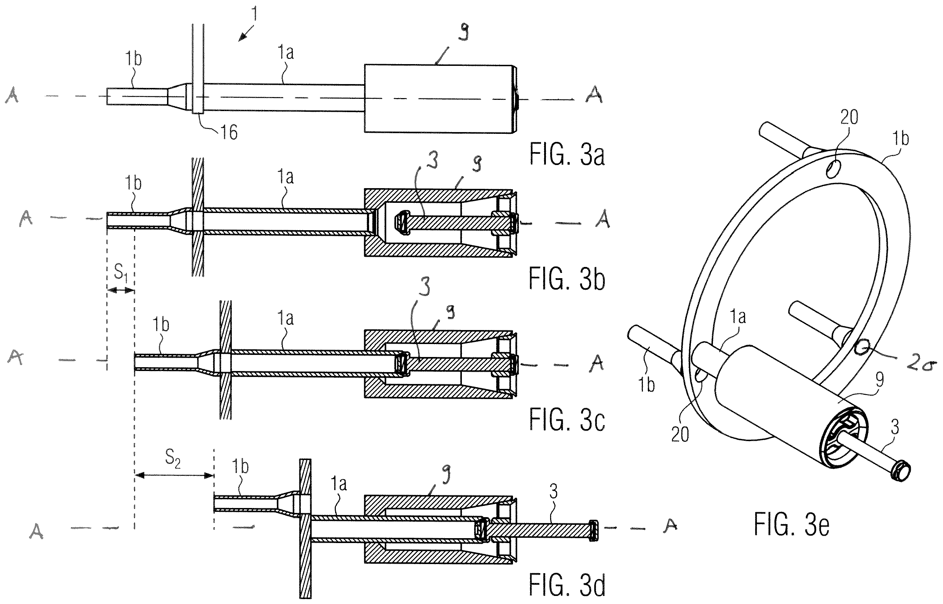

Die Fig. 3a-d entsprechen einem weiteren Ausführungsbeispiel gemäß der vorliegenden Erfindung. Die Fig. 3a-d entsprechen im Wesentlichen den Fig. 2a-2d, wobei sich hier jedoch das Füllrohr aus einem Füllgutzuführrohr 1a und einem vorderen Füllrohrabschnitt 1b zusammensetzt. Die beiden Füllrohrabschnitte 1a,b sind über eine drehbare Scheibe 16 (siehe Fig. 3e) miteinander verbunden. Dabei ist der Füllrohrabschnitt 1b fest an der dem Füllgutzufuhrrohr 1a abgewandten Seite mit der Scheibe 16 verbunden, während das Füllgutzuführrohr 1a auf der Oberfläche der Scheibe 16 derart aufliegt, dass sich die Scheibe 16 an der Öffnung des Füllgutrohrs vorbei bewegen kann und diese Öffnung entweder über eine Öffnung 20 in der Scheibe 16 mit dem Füllrohrabschnitt 1b verbinden kann oder aber mit der Fläche der Scheibe 16 verschließen kann. Bei diesem Ausführungsbeispiel wird, wie im Zusammenhang mit Fig. 2b,c und d erläutert wurde, das Füllrohr 1, das hier aus den Abschnitten 1a, 1b zusammengesetzt ist, in Axialrichtung nach hinten in die Endposition (Fig. 3d) verfahren. In dieser Endposition kann nun der Füllrohrabschnitt 1b von dem Füllgutzufuhrrohrabschnitt 1a abgekoppelt werden, d.h. bei diesem konkreten Ausführungsbeispiel wird die Scheibe 16, die drehbar gelagert ist, derart verdreht, dass der Füllrohrabschnitt 1b von der vorderen Öffnung des Füllgutzuführrohrabschnitts 1a mit der entsprechenden Öffnung 20 in der Scheibe 16 wegbewegt wird, derart, dass die vordere Öffnung des Füllgutzuführrohrs 1a durch die Scheibe 16 verschlossen wird. Dies ist insbesondere vorteilhaft, da nun keine Füllgutreste aus dem Füllgutzuführrohr 1a nach vorne austreten können. Wie aus Fig. 3c hervorgeht, ist es möglich, dass an einer Scheibe 16 mehrere Füllrohrabschnitte 1b angeordnet sind, wobei die Scheibe so lang gedreht werden kann, bis ein neues Füllrohr 1b mit einer entsprechenden Öffnung 20 in der Scheibe 16 an dem Füllgutzuführrohr anliegt und fluchtet. Auf diesem neuen Füllrohrabschnitt 1b ist beispielsweise eine neue Wursthülle aufgezogen. Aus der Endposition, wie sie in Fig. 3d gezeigt ist, kann dann, wenn der neue Füllrohrabschnitt 1b an das Füllgutzuführrohr 1a angekoppelt ist, das zusammengesetzte Füllrohr 1 wieder, wie im Zusammenhang mit Fig. 2 beschrieben wurde, in die Füllposition, wie in Fig. 3b gezeigt ist, verfahren werden.

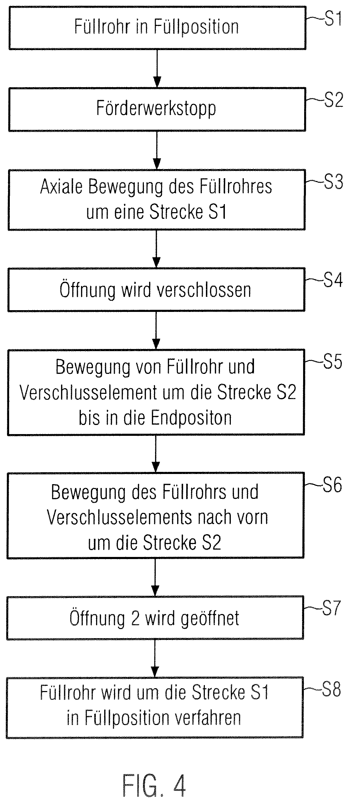

Anhand des in Fig. 4 gezeigten Ablaufplans wird nachfolgend das Verfahren gemäß der vorliegenden Erfindung nochmals näher erläutert. Das Füllrohr befindet sich im Schritt s1 zunächst in einer Füllposition, wie beispielsweise in den Fig. 2a+b gezeigt ist, wobei die Öffnung 2 des Füllrohrs 1 geöffnet ist, und während des Befüllens pastöse Masse durch die Öffnung 2 in das Füllrohr 1 gefüllt wird. Beim Beenden des Füllvorgangs oder beim Unterbrechen des Füllvorgangs wird das Förderwerk 7 gestoppt. Eine Steuereinrichtung (nicht dargestellt) kann beispielsweise gleichzeitig zum Stoppsignal des Förderwerks ein Signal an einen Antrieb des Füllrohrs 1 leiten, das einen Antrieb zum Bewegen des Füllrohrs nach hinten ausgibt. Die Bewegung des Füllrohrs nach hinten sollte gleichzeitig oder unmittelbar nach dem Stoppen des Förderwerks erfolgen (z.B. spätestens 0,2 s nach Stopp des Förderwerks).

Im Schritt s3 erfolgt dann die axiale Bewegung des Füllrohrs 1 um eine Strecke S1 (siehe Fig. 2c, 3c). Dabei wird die Öffnung 2 in einem Schritt s4 durch das axial angeordnete Verschlusselement 3 verschlossen. In einem Schritt s5 bewegen sich das Füllrohr 1 und das Verschlusselement 3 bei geschlossener Öffnung 2 um eine Strecke S2 gemeinsam in die Endposition, wie in Fig. 2d und 3d dargestellt ist.

Bei der Bewegung des Füllrohrs 1 und des Verschlusselements 3 bleibt die Öffnung 2 mit Hilfe der Halteeinrichtung 4, hier der Magnethalteeinrichtung, verschlossen. In der in der Fig. 2d oder 3d gezeigten Endposition des Füllrohrs bzw. des Verschlusselements 3 kann nun entweder eine neue Wursthülle auf das Füllrohr 1 aufgezogen werden oder aber der vordere Füllrohrabschnitt 1b durch einen neuen Füllrohrabschnitt 1b ausgetauscht werden, beispielsweise durch Drehen der Scheibe 16 (siehe Fig. 3d,3e).

In einen Schritt s6 bewegen sich nun Füllrohr 1 (oder 1b, 1a) gemeinsam nach vorne, d.h. in entgegengesetzte Richtung, wobei auch hier weiter über die Halteeinrichtung 4 die Öffnung 2 verschlossen bleibt und das Füllrohr 1 das Verschlusselement 3 mit nach vorne ziehen kann. Das Füllrohr 1 und Verschlusselement 3 werden über eine Strecke S2 nach vorne bewegt, wobei dann das Verschlusselement 3 gestoppt wird, hier beispielsweise durch den Anschlag 5 am Führungselement 8. Das Füllrohr 1 bewegt sich dann von dem Verschlusselement 3 weg, die Halteeinrichtung 4 öffnet sich und die Öffnung 2 wird in einem Schritt s7 geöffnet. Das Füllrohr 1 wird dann ausgehend von der Strecke S2 noch die Strecke S1 weiter nach vorne in ihre anfängliche Füllposition verfahren. Das Förderwerk 7 kann dann wieder in Vorwärtsrichtung betrieben werden.

Während der Schritte s2 bis s5 kann das Förderwerk in Rückwärtsrichtung betrieben werden, um Reste von pastöser Masse rückzusaugen.

## Patentansprüche

1. Verfahren zum Befüllen von Wursthüllen mit pastöser Masse durch ein Füllrohr (1), wobei die pastöse Masse dem Füllrohr (1) durch eine Öffnung (2) an seinem hinteren Ende in Axialrichtung zugeführt wird, wobei am Ende des Befüllvorgangs das Füllrohr (1) aus seiner Füllposition in Axialrichtung zurück, entgegen der Transportrichtung der pastösen Masse, auf ein axial angeordnetes Verschlusselement (3) gefahren wird, wodurch die Öffnung (2) verschlossen wird.

2. Verfahren nach Anspruch 1, **dadurch gekennzeichnet, dass** nachdem das Füllrohr (1) eine erste Strecke (S1) auf das Verschlusselement (3) bewegt wurde, das Füllrohr (1) und das Verschlusselement (3) zusammen über eine zweite Strecke (S2) in Axialrichtung in eine Endposition verfahren werden, wobei vorzugsweise die zweite Strecke (S2) ≥ der ersten Strecke (S1) ist.

3. Verfahren nach Anspruch 1 oder 2, **dadurch gekennzeichnet, dass** das Füllrohr (1) und das Verschlusselemen (3) über eine Halteeinrichtung (4), insbesondere über Magnetkraft, miteinander verbunden sind.

4. Verfahren nach mindestens einem der Ansprüche 1-3, **dadurch gekennzeichnet, dass** das Füllrohr (1), nachdem es verschlossen wurde, wieder weg vom Verschlusselement (3) in eine Füllposition bewegt wird und insbesondere
das Verschlusselement (3) und Füllrohr (1) gemeinsam aus einer Endposition in entgegengesetzter Axialrichtung nach vorne bewegt werden, und bevor das Füllrohr (1) wieder in der Füllposition angeordnet ist, die Öffnung (2) des Füllrohrs (1) geöffnet wird.

5. Verfahren nach mindestens Anspruch 2, **dadurch gekennzeichnet, dass** das Verschlusselement (3), nachdem es die zweite Strecke (S2) in Axialrichtung nach vorne bewegt wurde, gestoppt wird, insbesondere auf einen Anschlag läuft.

6. Verfahren nach Anspruche 5, **dadurch gekennzeichnet, dass** das Verschlusselement (3) in der Anschlagposition über eine weitere Halteeinrichtung (6), insbesondere durch Magnetkraft, gehalten wird.

7. Verfahren nach mindestens einem der vorhergehenden Ansprüche, **dadurch gekennzeichnet, dass** sich das Füllrohr (1) aus der Füllposition in Axialrichtung zurück bewegt, wenn ein Förderwerk (7) zum Beschicken des Füllrohrs (1) ausgeschaltet wird, wobei vorzugsweise das Förderwerk (7) im Anschluss rückwärts läuft.

8. Verfahren nach mindestens einem der Ansprüche 1-7, **dadurch gekennzeichnet, dass** das Verschlusselement (3) bei seiner Axialbewegung in einer Führung (8) geführt wird und durch das Füllrohr (1) bewegt wird und/oder über einen Antrieb und/oder über Federenergie bewegt wird.

9. Verfahren nach mindestens einem der Ansprüche 1-8, **dadurch gekennzeichnet, dass** das Füllrohr (1) ein Füllgutzuführrohr (1a) umfasst sowie einen axial angeordneten abkoppelbaren vorderen Füllrohrabschnitt (1b), wobei in der Endposition der vordere Füllrohrabschnitt abgekoppelt ist und vorzugsweise die vordere Öffnung des Füllgutzuführrohrs (1a) verschlossen wird.

10. Vorrichtung zum Befüllen von Wursthülle mit pastöser Masse, insbesondere durch ein Verfahren nach mindestens einem der Ansprüche 1-9, mit einem Füllrohr (1), das axial beweglich angeordnet ist und mit einer Zuführeinrichtung (9), über die die pastöse Masse einer Öffnung (2) am hinteren Ende des Füllrohrs (1) axial zuführbar ist, wobei ein axial angeordnetes Verschlusselement (3), über das die Öffnung (2) verschließbar ist, wenn das Füllrohr (1) aus seiner Füllposition zurück, entgegen der Transportrichtung der pastösen Masse, auf das Verschlusselement (3) gefahren wird.

11. Vorrichtung nach Anspruch 10, **dadurch gekennzeichnet, dass** das Verschlusselement axial beweglich in der Zuführeinrichtung (9) angeordnet ist und insbesondere als axial beweglicher Stößel ausgebildet ist, dessen vorderes Ende (11) die Füllrohröffnung (2) verschließt.

12. Vorrichtung nach Anspruch 10 oder 11, **dadurch gekennzeichnet, dass** das Füllrohr (1) und das Verschlusselement (3) gemeinsam in Axialrichtung nach hinten in eine Endposition verfahrbar sind.

13. Vorrichtung nach mindestens einem der Ansprüche 10-12, **dadurch gekennzeichnet, dass** das Füllrohr über eine Halteeinrichtung (4) mit dem Verschlusselement (3) verbindbar ist, insbesondere mit einer Magnethalteeinrichtung (4).

14. Vorrichtung nach mindestens einem der Ansprüche 10-13, **dadurch gekennzeichnet, dass** die axiale Bewegung des Verschlusselements nach vorne, d.h. in Transportrichtung der pastösen Masse, durch eine erste Stoppeinrichtung, insbesondere einen Anschlag (5) begrenzt wird, wobei vorzugsweise das Verschlusselement durch eine weitere Halteeinrichtung (6) in der Anschlagposition, insbesondere durch eine Magnethalteeinrichtung, (6) gehalten wird.

15. Vorrichtung nach mindestens einem der Ansprüche 10-14, **dadurch gekennzeichnet, dass** die Zuführeinrichtung (9) mit dem Auslauf (12) eines Förderwerks (7) verbunden ist.

## Claims

1. Method for filling of sausage sleeves with pasty material through a filling tube (1), wherein the pasty material is fed into the filling tube (1) through an opening (2) on its rear end in the axial direction,wherein
at the end of the filling process, the filling tube (1) is moved out of its filling position in the axial direction back against the transport direction of the pasty material to an axially arranged closing element (3) whereby the opening (2) is closed.

2. Method according to Claim 1, **characterized in that**, after having moved the filling tube (1) over a first path (S1) onto the closing element (2), the filling pipe (1) and the closing element (2) are moved together over a second path (S2) in the axial direction into an end position, wherein the second path (S2) is preferably ≥ the first path (S1).

3. Method according to Claim 1 or 2, **characterized in that** the filling tube (1) and the closing element (3) are connected to one another by means of a holding device (4), in particular by means of magnetic force.

4. Method according to at least one of the Claims 1-3, **characterized in that** the filling tube (1), after having been closed, is moved back away from the closing element (3) into a filling position and in particular
the closing element (3) and the filling tube (1) are moved jointly out of an end position in the opposite axial direction towards the front and, prior to the filling tube (1) being arranged once again in the filling position, the opening (2) of the filling tube (1) is opened.

5. Method according to at leastclaim 2, **characterized in that** the closing element (3), after having been moved towards the front over the second path (S2) in the axial direction, is stopped, in particular runs on an end stop.

6. Method according to Claim 5, **characterized in that** the closing element (3) is held in the end stop position by means of a further holding device (6), in particular by means of magnetic force.

7. Method according to at least one of the preceding claims, **characterized in that** the filling tube (1) moves out of the filling position back in the axial direction when a conveyor system (7) for feeding the filling tube (1) is switched off, wherein the conveyor system (7) preferably runs in a backward direction afterwards.

8. Method according to at least one of the Claims 1-7, **characterized in that** the closing element (3) is led in a guiding system (8) during its axial movement and moved by the filling tube (1) and/or moved by means of a drive and/or by means of spring energy.

9. Method according to at least one of the Claims 1-8, **characterized in that** the filling tube (1) comprises a filling material feeding tube (1a) as well as a disconnectable front section of the filling tube (1b), wherein the front section of the filling tube is disconnected in the end position and the front opening of the filling material feeding tube (1a) is preferably being closed.

10. Device for filling of sausage sleeves with a pasty material, in particular by means of a method according to at least one of the Claims 1-9, with a filling tube (1), which is arranged in an axially movable way, and with a feeding device (9) through which the pasty material can be fed axially into an opening (2) on the rear end of the filling tube (1) wherein
an axially arranged closing element (3) is provided by means of which the opening (2) can be closed when the filling tube (1) is moved onto the closing element (3) against the transport direction of the pasty material.

11. Device according to Claim 10, **characterized in that** the closing element is disposed in an axially movable way in the feeding device (9) and in particular formed as an axially movable plunger whose front end (11) closes the filling tube opening (2).

12. Device according to Claim 10 or 11, **characterized in that** the filling tube (1) and the closing element (3) can be moved jointly in the axial direction towards the rear into an end position.

13. Device according to at least one of the Claims 10-12, **characterized in that** the filling tube can be connected to the closing element (3) via a holding device (4), in particular via a magnetic holding device (4).

14. Device according to at least one of the Claims 10-13, **characterized in that** the axial movement of the closing element towards the front, i.e. in the transport direction of the pasty material, is limited by a first stop device, in particular an end stop (5), wherein preferably the closing element is held in the end stop position by a further holding device (6), in particular by a magnetic holding device (6).

15. Device according to at least one of the Claims 10-14, **characterized in that** the feeding device (9) is connected to the outlet (12) of a conveyor system (7).

## Revendications

1. Procédé de remplissage d'enveloppes de saucisses avec une masse pâteuse au moyen d'un tube de remplissage (1), dans lequel la masse pâteuse est amenée au tube de remplissage (1) dans la direction axiale à travers une ouverture (2) située à son extrémité postérieure, dans lequel, à la fin de l'opération de remplissage, le tube de remplissage (1) est déplacé en arrière dans la direction axiale, dans le sens opposé à la direction de transport de la masse pâteuse, de sa position de remplissage sur un élément de fermeture (3) agencé axialement, grâce à quoi l'ouverture (2) est fermée.

2. Procédé selon la revendication 1, **caractérisé en ce que**, après que le tube de remplissage (1) a été déplacé sur l'élément de fermeture (3) en parcourant une première distance (S1), le tube de remplissage (1) et l'élément de fermeture (3) sont déplacés ensemble dans la direction axiale dans une position finale en parcourant une seconde distance (S2), la seconde distance (S2) étant de préférence supérieure ou égale à la première distance (S1).

3. Procédé selon la revendication 1 ou 2, **caractérisé en ce que** le tube de remplissage (1) et l'élément de fermeture (3) sont reliés l'un à l'autre par l'intermédiaire d'un dispositif de maintien (4), notamment par une force magnétique.

4. Procédé selon au moins une des revendications 1-3, **caractérisé en ce que** le tube de remplissage (1), après avoir été fermé, est à nouveau éloigné de l'élément de fermeture (3) et amené dans une position de remplissage, et notamment l'élément de fermeture (3) et le tube de remplissage (1) sont déplacés ensemble vers l'avant dans une direction axiale opposée, à partir d'une position finale, et l'ouverture (2) du tube de remplissage (1) est ouverte avant que le tube de remplissage (1) se trouve à nouveau dans la position de remplissage.

5. Procédé selon au moins la revendication 2, **caractérisé en ce que** l'élément de fermeture (3) est arrêté, notamment rencontre une butée, après qu'il a parcouru la seconde distance (S2) vers l'avant dans la direction axiale.

6. Procédé selon la revendication 5, **caractérisé en ce que** l'élément de fermeture (3) est maintenu dans la position de butée par l'intermédiaire d'un autre dispositif de maintien (6), notamment grâce à une force magnétique.

7. Procédé selon au moins une des revendications précédentes, **caractérisé en ce que** le tube de remplissage (1) quitte la position de remplissage en reculant dans la direction axiale lorsqu'un mécanisme d'acheminement (7) permettant d'alimenter le tuyau de remplissage (1) est désactivé, le mécanisme d'acheminement (7) se déplaçant ensuite, de préférence, vers l'arrière.

8. Procédé selon au moins une des revendications 1-7, **caractérisé en ce que** l'élément de fermeture (3) est guidé dans un guide (8) lorsqu'il effectue son mouvement axial et est déplacé par le tube de remplissage (1) et/ou par l'intermédiaire d'un entraînement et/ou par le biais d'une énergie élastique.

9. Procédé selon au moins une des revendications 1-8, **caractérisé en ce que** le tube de remplissage (1) comprend un tube d'alimentation de matière de remplissage (1a) ainsi qu'un segment antérieur de tube de remplissage (1b) agencé axialement pouvant être désolidarisé, dans lequel, dans la position finale, le segment antérieur de tube de remplissage est désolidarisé et l'ouverture antérieure du tube d'alimentation de matière de remplissage (1a) est de préférence fermée.

10. Dispositif de remplissage d'enveloppes de saucisses avec une masse pâteuse, notamment grâce à un procédé selon au moins une des revendications 1-9, comprenant un tube de remplissage (1) qui est agencé de manière mobile axialement et comprenant un dispositif d'amenée (9) par le biais duquel la masse pâteuse peut être amenée axialement à une ouverture (2) située à l'extrémité postérieure du tube de remplissage (1), dans lequel il est prévu un élément de fermeture (3) agencé axialement, par le biais duquel l'ouverture (2) peut être fermée lorsque le tube de remplissage (1) est déplacé en arrière, dans le sens opposé à la direction de transport de la masse pâteuse, de sa position de remplissage sur l'élément de fermeture (3).

11. Dispositif selon la revendication 10, **caractérisé en ce que** l'élément de fermeture est agencé de manière mobile axialement dans le dispositif d'amenée (9) et est exécuté notamment en tant que coulisseau mobile dont l'extrémité antérieure (11) ferme l'ouverture (2) du tube de remplissage.

12. Dispositif selon la revendication 10 ou 11, **caractérisé en ce que** le tube de remplissage (1) et l'élément de fermeture (3) peuvent être déplacés ensemble vers l'arrière dans la direction axiale, dans une position finale.

13. Dispositif selon au moins une des revendications 10-12, **caractérisé en ce que** le tube de remplissage peut être relié à l'élément de fermeture (3) par l'intermédiaire d'un dispositif de maintien (4), notamment à l'aide d'un dispositif de maintien magnétique (4).

14. Dispositif selon au moins une des revendications 10-13, **caractérisé en ce que** le mouvement axial de l'élément de fermeture vers l'avant, c'est-à-dire dans la direction de transport de la masse pâteuse, est limité par un premier dispositif d'arrêt, notamment une butée (5), dans lequel l'élément de fermeture est de préférence maintenu dans la position de butée par un autre dispositif de maintien (6), notamment par un dispositif de maintien magnétique (6).

15. Dispositif selon au moins une des revendications 10-14, **caractérisé en ce que** le dispositif d'amenée (9) est relié à la sortie (12) d'un mécanisme d'acheminement (7).
